# EUROPÄISCHE PATENTSCHRIFT

(11) **EP 4 530 830 B1**
(45) Veröffentlichungstag und Bekanntmachung des Hinweises auf die Patenterteilung: **11.11.2026**
(21) Anmeldenummer: 23200608.0
(22) Anmeldetag: 28.09.2023
(51) Int. Cl.: G06F 8/51, G06F 8/77, G06F 11/36, G06N 3/045, G06N 3/092

(54) **VERFAHREN ZUR AUTOMATISIERTEN PROGRAMMCODE ÜBERSETZUNG VON EINER URSPRUNGSSPRACHE IN EINE ZIELSPRACHE**
METHOD FOR AUTOMATED PROGRAM CODE CONVERSION OF A SOURCE LANGUAGE TO A TARGET LANGUAGE
PROCÉDÉ DE TRADUCTION AUTOMATISÉE DE CODE DE PROGRAMME D'UN LANGAGE D'ORIGINE EN LANGAGE CIBLE

(43) Veröffentlichungstag der Anmeldung: 02.04.2025
(73) Patentinhaber: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Hecking-Harbusch, Jesko, 71229 Leonberg (DE); Sierra Loaiza, Sebastian Ernesto, 04107 Leipzig (DE)

(56) Entgegenhaltungen:
- US-A1- 2003 041 288
- US-A1- 2022 308 848
- US-A1- 2023 195 428
- ZHONG MAOSHENG ET AL: "CodeGen-Test: An Automatic Code Generation Model Integrating Program Test Information", ARXIV (CORNELL UNIVERSITY), 14 February 2022 (2022-02-14), Ithaca, XP093131168, Retrieved from the Internet <URL:https://arxiv.org/pdf/2202.07612.pdf> [retrieved on 20240214], DOI: 10.48550/arxiv.2202.07612
- MARK CHEN ET AL: "Evaluating Large Language Models Trained on Code", ARXIV.ORG, CORNELL UNIVERSITY LIBRARY, 201 OLIN LIBRARY CORNELL UNIVERSITY ITHACA, NY 14853, 7 July 2021 (2021-07-07), XP091008839
- JIAWEI LIU ET AL: "Is Your Code Generated by ChatGPT Really Correct? Rigorous Evaluation of Large Language Models for Code Generation", ARXIV.ORG, CORNELL UNIVERSITY LIBRARY, 201 OLIN LIBRARY CORNELL UNIVERSITY ITHACA, NY 14853, 2 May 2023 (2023-05-02), XP091499173
- ALEX GROCE ET AL: "Provenance and Pseudo-Provenance for Seeded Learning-Based Automated Test Generation", ARXIV.ORG, CORNELL UNIVERSITY LIBRARY, 201 OLIN LIBRARY CORNELL UNIVERSITY ITHACA, NY 14853, 5 November 2017 (2017-11-05), XP080834511
- CHUNQIU STEVEN XIA ET AL: "Universal Fuzzing via Large Language Models", ARXIV.ORG, CORNELL UNIVERSITY LIBRARY, 201 OLIN LIBRARY CORNELL UNIVERSITY ITHACA, NY 14853, 9 August 2023 (2023-08-09), XP091590226

## Beschreibung

### Stand der Technik

Es existieren Verfahren zur automatisierten Programmcode Übersetzung von einer Ursprungssprache oder Source Sprache in eine Zielsprache oder Target Sprache.

Zum Beispiel wird eine Übersetzung per Hand, das heißt durch einen Programmierer vorgenommen. Dieses Vorgehen ist nicht effizient.

Weiterhin existieren dedizierte Code Übersetzer. Diese sind jedoch nur für wenige Source-Target-Sprachen verfügbar. Ein Problem ist, dass die Übersetzungen nicht garantieren, dass der Code in der Zielsprache funktionabel ist. Zudem kann unlesbarer Code erzeugt werden, der zum Beispiel keine Wartbarkeit hat, weil die Übersetzung mechanistisch erfolgt. Schließlich besteht die Gefahr, dass der dedizierte Code Übersetzer potenziell die Idiome aus der Source Sprache übernimmt und nicht an die Target Sprache anpasst.

In letzter Zeit wird versucht, Large Language Models (LLM) oder Code Assistants für eine Code Übersetzung zu verwenden. Probleme treten jedoch auf, da LLMs und Code Assistants keine Garantien für die Korrektheit des übersetzten Codes liefern.

US 2022/308848 A1 beschreibt ein automatisiertes System zur Übersetzung von Quellcode zwischen Programmiersprachen unter Verwendung eines neuronalen Transformer-Modells mit Attention, das auf semisupervisierten Daten trainiert wird. Das Modell wird zunächst mittels Masked-Language-Modeling und autoregressiven Zielen auf einem großen unsupervisierten Quellcodekorpus vortrainiert und anschließend mit tokenbasierten Vorhersagezielen sowie autoregressiven Zielen auf überwachten Übersetzungsaufgaben feinabgestimmt, um Programmcode von einer Sprache in eine andere zu übersetzen.

US 2023/195428 A1 offenbart ein tiefes neuronales Modell zur Vorhersage von Programmcode, das mittels Reinforcement Learning für eine Zielaufgabe der Codegenerierung abgestimmt wird. Der Reward berücksichtigt dabei verschiedene Codequalitätsfaktoren wie syntaktische Korrektheit, erfolgreiche Kompilierung und Ausführung, funktionale Korrektheit, Lesbarkeit und Testabdeckung sowie Metriken, die die Nähe des vorhergesagten Codes zu einem Referenzcode bewerten.

ZHONG Maosheng et al., CodeGen-Test: An Automatic Code Generation Model Integrating Program Test Information, 2022, arxiv.2202.0761, beschreibt ein Modell zur automatischen Codegenerierung, das Testinformationen während der Erzeugung berücksichtigt und Testergebnisse zur Verbesserung der generierten Programme einbezieht.MARK CHEN et al., Evaluating Large Language Models Trained on Code, 2021, arXiv:2107.03374, untersucht die Leistungsfähigkeit großer Sprachmodelle (engl. "Large Language Models"), die auf öffentlich zugänglichem Quellcode trainiert wurden, insbesondere im Hinblick auf ihre Fähigkeit, Code zu erzeugen und Programmieraufgaben zu lösen.

JIAWEI LIU et al., Is Your Code Generated by ChatGPT Really Correct? Rigorous Evaluation of Large Language Models for Code Generation, 2023, arXiv:2305.01210, analysiert die funktionale Korrektheit von durch große Sprachmodelle erzeugtem Code anhand systematischer Tests und Bewertungsmethoden.

ALEX GROCE et al., Provenance and Pseudo-Provenance for Seeded Learning-Based Automated Test Generation, 2017, arXiv:1711.01661, beschreibt Verfahren zur automatisierten Testfallgenerierung auf Basis von Seed-Tests sowie Methoden zur Bestimmung der Herkunft erzeugter Tests.

CHUNQIU STEVEN XIA et al., Universal Fuzzing via Large Language Models, 2023, arXiv:2308.04748, untersucht den Einsatz großer Sprachmodelle zur Unterstützung von Fuzzing, insbesondere durch das automatische Erzeugen von Testeingaben und Fuzzing-Ideen.

US 2003/041288 A1 betrifft ein Verfahren und System zum dynamischen Aufrufen und/oder Überprüfen von Bedingungen eines Computer-Testprogramms.

### Offenbarung der Erfindung

Ein erster allgemeiner Aspekt der vorliegenden Offenbarung betrifft ein Verfahren zur automatisierten Programmcode Übersetzung von einer Ursprungssprache in eine Zielsprache, wie in Anspruch 1 dargelegt.

Ein zweiter allgemeiner Aspekt der vorliegenden Offenbarung betrifft ein Computersystem, wie in Anspruch 6 dargelegt.

Ein dritter allgemeiner Aspekt der vorliegenden Offenbarung betrifft ein Computerprogramm, wie in Anspruch 7 dargelegt.

Ein vierter allgemeiner Aspekt der vorliegenden Offenbarung betrifft ein computerlesbares Medium oder Signal, wie in Anspruch 8 dargelegt.

Weitere Ausführungsformen sind in den abhängigen Ansprüchen beschrieben.

Die Techniken des ersten, zweiten, dritten, und vierten allgemeinen Aspekts können in manchen Situationen einen oder mehrere der folgenden Vorteile haben.

Es wird eine Symbiose aus einem Sprachmodell zur Generierung von Code (unter Nutzung der Kreativität des Sprachmodells) und von Verifikation und Validierung (V&V) Techniken vorgeschlagen, um Resultate des Sprachmodells abzusichern. Diese starke oder vollständige Automatisierung erhöht die Effizienz. Die V&V Techniken werden eingesetzt, um sicher zu stellen, dass das Ergebnis (wahrscheinlich) korrekt ist, dem Nutzer über die Korrektheit, Konfidenz und/oder Qualität der Übersetzung Feedback zu geben und die Code Übersetzung zuverlässiger zu machen.

Die vorliegende Offenbarung ermöglicht Garantien für den automatisch übersetzten Code. Durch den Einsatz von Sprachmodellen wie LLMs für die Übersetzung des Codes ist der übersetzte Code verständlich und nutzt die Eigenschaften der Zielsprache aus. Vorteilhaft ist, dass der resultierende Code Eigenschaften wie funktionale Äquivalenz und weitere Eigenschaften insbesondere auch Sicherheitsanforderungen erfüllt. Zudem wird die Qualität des resultierenden das heißt übersetzten Codes gemessen und bewertet.

Die vorliegende Offenbarung ermöglicht eine Code Übersetzung, welche Sicherheitsanforderungen erfüllt. Entsprechend kann der generierte Code auf sicherheitskritischen Systemen wie zum Beispiel einem Steuergerät insbesondere im Automobilbereich laufen.

Einige Begriffe werden in der vorliegenden Offenbarung in folgender Weise verwendet.

Ein "Sprachmodell" kann insbesondere ein Large Language Model (LLM), neuronales Netz, Recurrent Neural Network (RNN), ein Transformer Model oder ein Codemodell als ein auf Code spezialisiertes Sprachmodell oder auch ein ganz allgemeines Sprachmodell, das auch Code umfasst, sein. Weiterhin umfasst sind Computersprachen, Codes wie Programmcodes einer Recheneinrichtung wie einem Computer. Die Sprache des Modells kann nicht nur natürliche Sprachen, sondern auch künstliche Sprachen wie zum Beispiel Programmiersprachen beinhalten.

Das "Testen", "Prüfen" oder "Vergleichen des Ursprung-Programmcodes und des Ziel-Programmcodes" kann umfassen: eine formale Prüfung des gleichen Verhaltens des Ursprung-Programmcodes und des Ziel-Programmcodes zum Beispiel mittels Bounded Model Checking, Tests in der Ursprungssprache, Test auf Contracts in der Ursprungssprache und/oder syntaktischen und stilistischen Tests, Fuzzing, Mutation der Eingänge des Test-Harness, Ableitung aus Contracts der Ursprungssprache und/oder der Zielsprache und/oder Ableitung aus einem Sprachmodell.

Ein "Test-Harness" bzw. Testrahmen umfasst eine Sammlung von Software und Testdaten, die zum systematischen automatisierten Testen eines Programms unter verschiedenen Umgebungsbedingungen verwendet wird. Ein Test-Harness umfasst üblicherweise eine Testausführungs-Engine, welche für die Abarbeitung der Testlogik verantwortlich ist, und ein Testdaten-Repository oder Datenbank, welches die Testskripte, Testprogramme und sonstige Testressourcen beinhaltet. Hier wird der Test-Harness automatisiert erzeugt, indem zum Beispiel differenzierende Tests zu der Datenbank hinzugefügt werden. Der Start des Tests kann mit gegebenen oder vorgefertigten Tests aus der Test-Datenbank gestartet werden. Das System kann zudem Tests automatisch generieren.

Daten können hier Software Code inklusive Test cases und harnesses plus zusätzlichen (natürlich-sprachlichen) Beschreibungen von der Funktionsweise bzw. Gültigkeitsbereichen sein. Beispielhaft wird hier C als Source Sprache und Rust als Target Sprache beschrieben, es sind andere Kombinationen möglich. Die Übersetzung von C in Rust ist interessant, da Rust Features im Bereich sicherheitskritischer Systeme bietet, aber viel Legacy Code in anderen Sprachen, vor allem C vorhanden ist.

"Contracts" sind Bestandteil einer vertragsbasierten Programmierung oder eines Entwurfs gemäß Vertrag ("Design by contract"). Dies ist ein Konzept der Softwareentwicklung mit dem Ziel eines optimierten Zusammenspiels einzelner Programmmodule durch die Definition formaler Verträge zur Verwendung von Schnittstellen, die über deren statische Definition hinausgehen.

"Fuzzing" oder "Fuzz-Testing" ist der automatisierte Prozess des Sendens von zufällig generierten Eingaben von einem Fuzzer an ein Ziel oder Zielprogramm und des Beobachtens der Reaktion des Ziels.

Ein "Fuzzer" oder "Fuzzing-Engine" ist ein Programm, das automatisch Eingaben generiert. Sie sind also nicht zwingend mit der zu testenden Software verbunden, und es wird auch keine Instrumentierung durchgeführt. Sie haben jedoch die Fähigkeit, Code zu instrumentieren, Testfälle zu erzeugen und zu testende Programme auszuführen. Bekannte Beispiele sind afl und libfuzzer.

Ein "Testfall" ist eine bestimmte Eingabe und ein bestimmter Testdurchlauf aus einem Test Harness oder einem Fuzz Test. Um die Reproduzierbarkeit zu gewährleisten, werden interessante Durchläufe (Finden neuer Codepfade oder Abstürze) gespeichert.

### Kurzbeschreibung der Figuren

**Fig. 1** ist ein Flussdiagramm, das die Techniken der vorliegenden Offenbarung zur automatisierten Programmcode Übersetzung illustriert.
**Fig. 2** zeigt schematisch ein System, in dem die Techniken der vorliegenden Offenbarung zur automatisierten Programmcode Übersetzung eingesetzt werden können.
**Fig. 3** zeigt schematisch ein System, in dem die Techniken der vorliegenden Offenbarung zur automatisierten Programmcode Übersetzung eingesetzt werden können.
**Fig. 4** ist ein Flussdiagramm, das die Techniken der vorliegenden Offenbarung zum Trainieren eines Sprachmodells illustriert.

### Detaillierte Beschreibung

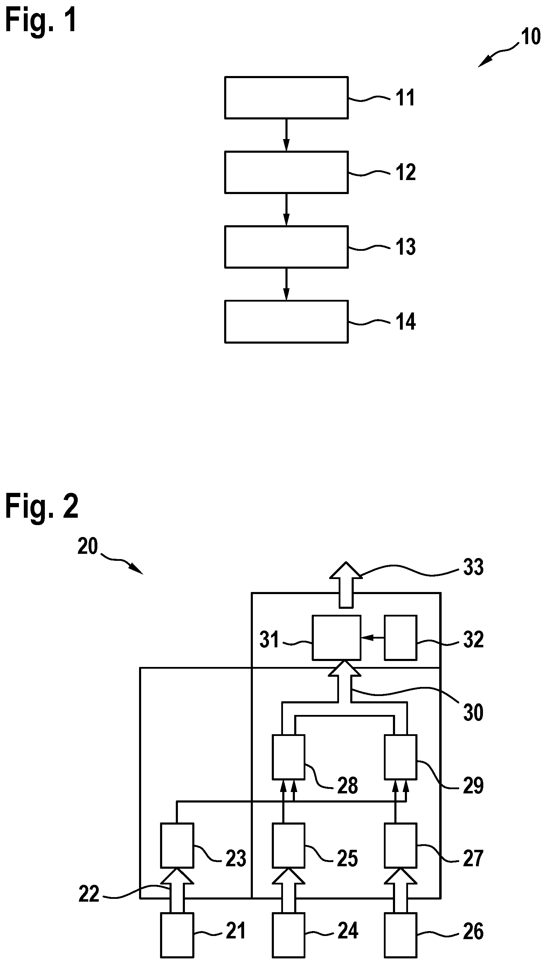

Fig. **1** ist ein Flussdiagramm, das ein Verfahren 10 zur automatisierten Programmcode Übersetzung von einer Ursprungssprache in eine Zielsprache zeigt.

In einem ersten Schritt erfolgt ein Übersetzen 11 eines Ursprung-Programmcodes in einer Ursprungssprache in einen Ziel-Programmcode in einer Zielsprache mittels eines Sprachmodells. Das Sprachmodell ist zum Beispiel ein Large Language Model (LLM) in welches per Eingabe (Prompt) Daten wie hier ein Programmcode zusammen mit einer Fragestellung wie hier einer Übersetzungsanfrage eingegeben werden.

Es erfolgt ein wiederholtes Durchführen 12 des Übersetzens mit geänderten Bedingungen, wie Änderung eines oder mehrerer Hyperparameter wie einem Temperatur-Parameter des Sprachmodells, Transformationen im Ursprung-Programmcode und/oder Änderungen in der Eingabe an das Sprachmodell wie zum Beispiel Änderungen in den Aufgaben oder Prompts. Zudem können Variablen im Code umbenannt werden.

Durch diese Maßnahmen wird eine Varianz erzeugt. Diese Varianz erlaubt eine Verifikation sowie eine verbesserte Qualitätsbewertung der erzeugten Übersetzungen und zudem ein Trainieren des Sprachmodells mittels einer Rückkopplung. Im Rahmen der verbesserten Qualitätsbewertung kann festgestellt werden, welche der erzeugten Übersetzungen besser oder schlechter geeignet sind.

Anschließend erfolgt ein Vergleichen 13 des Ursprung-Programmcodes und des oder der Ziel-Programmcodes mit einem Test-Harness, wobei der Test-Harness automatisiert erzeugt werden kann. Alternativ kann auch ein bereits existierender Test Harness verwendet werden. Tests des Test-Harness beziehungsweise der Test-Harness selbst werden automatisiert erzeugt, zum Beispiel durch Fuzzing, Mutation der Eingänge des Test-Harness, Ableitung aus Contracts der Ursprungssprache und/oder der Zielsprache und/oder aus einem Sprachmodell.

Das Vergleichen des Ziel-Programmcodes mit dem Test-Harness kann zum Beispiel mit einem oder mehreren vorgegebenen oder vorgefertigten Tests beginnen. Diese initialen Tests können zu den Codes gehören oder mit den Codes bereitgestellt werden. Die Tests können in einer Testdatenbank hinterlegt sein. Differenzierende Tests können dann zu der Testdatenbank hinzugefügt werden.

Ein automatischer Aufbau eines Test-Harnesses, der einen Ursprung-Programmcodes und einen Ziel-Programmcode vergleicht, umfasst die folgenden Schritte oder Vorgaben:
- Bei einem fehlgeschlagenen Vergleich auf gegebenen Tests wird diese Variante der Übersetzung verworfen.
- Bei einem fehlgeschlagenen Vergleich auf automatisch generierten Tests wird diese Variante der Übersetzung verworfen. Die oder der fehlgeschlagene Test wird übernommen, da dieser offensichtlich differenzierend ist. Das Übernehmen umfasst ein Speichern in der Testdatenbank.

Automatisch generierte Tests können entstehen aus Fuzzing, Mutation der Eingänge, Ableitung aus Contracts und gegebenenfalls aus einem Sprachmodell.
- Bei einem fehlgeschlagenen Vergleich auf differenzierenden Tests wird diese Variante verworfen.

Optional können statische Prüfungen parallel zu den Tests mit dem Test-Harness durchgeführt werden.
- Contracts werden entweder vorgegeben oder aus dem Systemumfeld extrahiert.
- Im Fall von Rust können Contracts auch durch den Compiler bereitgestellt werden, in anderen Sprachen z.B. auch durch Linter etc.
- Bounded model checking und/oder abstrakte Interpretation, realisiert in kommerziellen Tools wie z.B. Astrée oder Open-Source-tools wie z.B. CBMC.
- Automatischer Aufbau eines Bounded Model Checking Setups, das Ziel-Programmcode statisch gegen gegebene Contracts vergleicht.
- Automatischer Aufbau eines Abstract Interpretation Setups, das Ziel-Programmcode statisch gegen gegebene Contracts vergleicht.
- Automatischer Aufbau eines Bounded Model Checking Setups, das Ursprung-Programmcode und Ziel-Programmcode auf funktionale Gleichheit prüft.

Es erfolgt eine Bewertung 14 des Ziel-Programmcodes anhand von Code-Qualitätsmetriken wie zum Beispiel der Länge des Quellcodes, der Anzahl der Schleifen und oder der Verzweigungstiefe, Test-Qualitätsmetriken wie zum Beispiel der Branch coverage und/oder der Anzahl von verfügbaren oder durchgeführten Tests.

Gemäß einer Ausführungsform umfasst das Verfahren weiterhin, dass die Schritte 11 bis 14 des Anspruchs mehrmals ausgeführt werden, so dass mehrere Bewertungen von Ziel-Programmcodes erzeugt werden und wobei die mehreren Bewertungen jeweils mit einem Gütewert versehen werden.

Gemäß einer Ausführungsform umfasst das Verfahren weiterhin, dass die Gütewerte erzeugt werden basierend auf Code- und Testmetriken, der Anzahl verfügbarer Test, der Anzahl zusätzlich ausgeführter Tests und/oder der Art und/oder Anzahl formaler checks von Contracts der Zielsprache.

Die Bewertungen beziehungsweise die Gütewerte erlauben eine Vergleichbarkeit und Priorisierung der erzeugten Ziel-Programmcodes. Das Verfahren gibt nur korrekte Lösungen, das heißt Code Übersetzungen zurück und stellt zusätzlich Informationen zur Qualität und Konfidenz in die Korrektheit zur Verfügung.

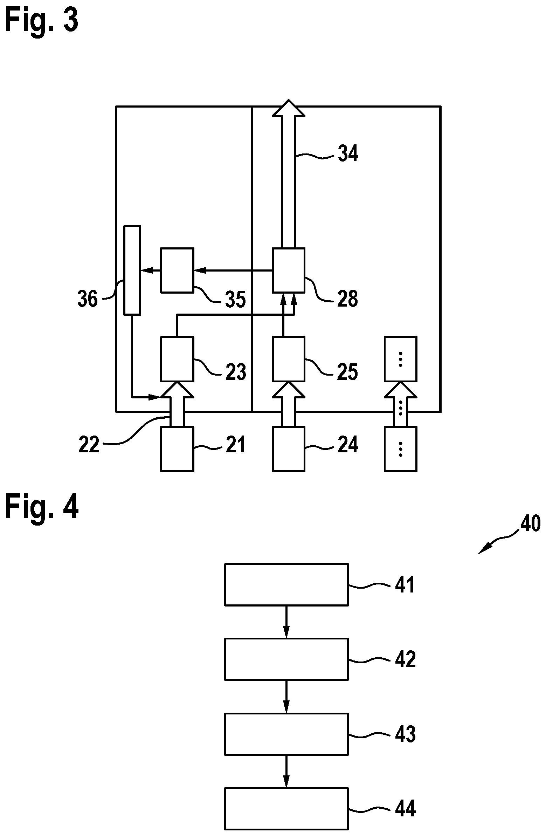

Fig. 2 zeigt schematisch ein Computersystem 20, in dem die Techniken der vorliegenden Offenbarung zur automatisierten Programmcode Übersetzung eingesetzt werden können. Das Computersystem 20 ist dafür ausgelegt, das Verfahren 10 gemäß Fig. 1 und das Verfahren 40 gemäß Fig. 4 auszuführen. Das Computersystem 20 kann in Hard- und/oder Software realisiert sein. Entsprechend kann das in Figur 2 gezeigte System als Computerprogramm angesehen werden, das dazu ausgelegt ist, das Verfahren 10 gemäß Fig. 1 und das Verfahren 40 gemäß Fig. 4 auszuführen.

Ein Ursprung-Programmcode 21 in einer Ursprungssprache wie zum Beispiel C wird einem Sprachmodell 22 wie zum Beispiel einem Large Language Model (LLM) zur Übersetzung in eine Zielsprache wie zum Beispiel Rust zur Verfügung gestellt. Das Sprachmodell 22 erzeugt ein Ziel-Programmcode 23 als Übersetzung des Ursprung-Programmcodes 21. Dieser Bereich des Computersystems 20 kann als Erzeugungsbereich bezeichnet werden.

Eine weitere Eingabe 24 in das System 20 sind Tests und optional ein Test-Harness in der Ursprungssprache. Alternativ oder optional können die Tests und/oder der Test-Harness in der Zielsprache vorliegen. Diese Eingaben werden einem Test-Harness 25 zugeführt. Der Test-Harness 25 nimmt Funktionen oder Tests in der Zielsprache auf.

Optional können Contracts 26 einer Contracts-Einheit 27, welche in der Zielsprache wie zum Beispiel Rust arbeitet, zugeführt werden. Dort werden die Contracts für spätere Überprüfungen des Ziel-Programmcodes 23 verwaltet.

Eingänge einer ersten Überprüfungs-Einheit 28 sind mit dem Sprachmodell 22 zur Eingabe des Ziel-Programmcodes 23 und mit dem Test-Harness 25 zur Eingabe von Testroutinen verbunden. In der ersten Überprüfungs-Einheit 28 wird der Ziel-Programmcode 23 mittels des Test-Harness 25 mit dem Ursprung-Programmcode 21 verglichen.

Eingänge einer zweiten Überprüfungs-Einheit 29 sind mit dem Sprachmodell 22 zur Eingabe des Ziel-Programmcodes 23 und mit der Contracts-Einheit 27 zur Eingabe von Contracts verbunden. In der zweiten Überprüfungs-Einheit 29 wird der Ursprung-Programmcode 21 mittels der Contracts 26 überprüft.

Wenn die Überprüfungen in der ersten Überprüfungs-Einheit 28 und in der zweiten Überprüfungs-Einheit 29 erfolgreich abgeschlossen sind, wird eine Statusmeldung 30 ausgegeben, dass der Ziel-Programmcode 23 in Ordnung ist. Dieser Bereich des Computersystems 20 kann als Überprüfungsbereich bezeichnet werden.

Der Ziel-Programmcode 31 wird anhand von Metriken 32 auf seine Güte bewertet. Die Metriken 32 können Code-Qualitätsmetriken, Test-Qualitätsmetriken und/oder die Anzahl von Tests umfassen. Bei erfolgreicher Bewertung wird als Ausgabe 33 der Ziel-Programmcode und seine Qualität oder Güte ausgegeben. Dieser Bereich des Computersystems 20 kann als Qualitätsbewertungsbereich bezeichnet werden.

Basierend auf der Bewertung kann eine Güte berechnet werden. Wenn mehrere Ziel-Programmcodes erzeugt worden sind, können die Lösungen dem Nutzer nach der Güte geordnet bereitgestellt werden.

Fig. 3 zeigt schematisch ein Computersystem 20, in dem die Techniken der vorliegenden Offenbarung zur automatisierten Programmcode Übersetzung eingesetzt werden können. Das Computersystem 20 kann dem Computersystem 20 aus Fig. 2 entsprechen. Das Computersystem 20 ist dafür ausgelegt, das Verfahren 10 gemäß Fig. 1 und das Verfahren 40 gemäß Fig. 4 auszuführen, insbesondere ist das Computersystem 20 aus Fig. 3 dafür ausgelegt das Trainings-Verfahren 40 gemäß Fig. 4 auszuführen. Das Computersystem 20 kann in Hard- und/oder Software realisiert sein. Entsprechend kann das in Figur 3 gezeigte System als Computerprogramm angesehen werden, das dazu ausgelegt ist, das Verfahren 10 gemäß Fig. 1 und das Verfahren 40 gemäß Fig. 4 auszuführen.

In Fig. 3 wird ein Fehlerbehandlungsmechanismus des Computersystems 20 dargestellt. Falls kein Ziel-Programmcode 31 ohne Fehler generiert werden kann, führt das in der ersten Überprüfungs-Einheit 28 zu einem Fehler. Entsprechend wird eine Meldung 34 zur Reduzierung des Vertrauens in die Übersetzung ausgegeben. Zudem wird in einem Fehlermodul 35 der Fehler sowie der zugehörige Ziel-Programmcode 31 hinterlegt.

Aus dem Fehlermodul 35 wird als Information 36 der bisher beste Ziel-Programmcode mit den noch existierenden Fehlern zu dem Sprachmodell 22 zurückgeführt, um damit einen besseren im Idealfall fehlerfreien Ziel-Programmcode zu generieren. Dies vermindert die Zuverlässigkeit und wird in der Qualitätsbestimmung berücksichtigt.

Optional kann sich dies nicht nur auf Fehler im Überprüfungsbereich beziehen, sondern analog auch auf Fehler im Qualitätsbewertungsbereich.

Fig. 4 ist ein Flussdiagramm, das ein Verfahren 40 zum Trainieren eines Sprachmodells illustriert. Das Verfahren 40 zum Trainieren eines Sprachmodells ist eingerichtet zur automatisierten Programmcode Übersetzung von einem Ursprung-Programmcode in einer Ursprungssprache in einen Ziel-Programmcode in einer Zielsprache.

In einem ersten Schritt erfolgt ein Eingeben 41 des Ursprung-Programmcodes in ein Sprachmodell und erzeugen eines prädiktiven Ziel-Programmcodes. Das Sprachmodell kann bereits vortrainiert und gegebenenfalls auch schon fein abgestimmt sein. Alternativ kann auch mit einem neuen, untrainierten Sprachmodell gestartet werden. Das Trainieren basiert hier auf Reinforcement Learning. Das Trainieren geschieht in einer Trainings-umgebung zum Beispiel mit PPO (Proximal Policy Optimization).

Weiter erfolgt ein automatisiertes Prüfen 42 des prädiktiven Ziel-Programmcodes basierend auf einer formalen Prüfung des gleichen Verhaltens des Ursprung-Programmcodes und des Ziel-Programmcodes, Tests in der Ursprungssprache, Test auf Contracts in der Ursprungssprache und/oder syntaktischen und stilistischen Tests.

Dann erfolgt ein Erzeugen 43 einer Belohnung für das Sprachmodell, wobei bei einer fehlgeschlagenen Prüfung eine negative Belohnung erzeugt wird. Der Wert der negativen Belohnung wird je negativer, desto falscher die Prüfung beziehungsweise deren Ergebnis ausfällt. Eine positive Belohnung wird erzeugt, wenn alle Prüfungen erfolgreich sind, und die Höhe eines Werts der Belohnung basiert auf der Anzahl der Tests in der Ursprungssprache und der Contracts in der Ursprungssprache.

Gemäß einer Ausführungsform umfasst das Verfahren weiterhin, dass der Wert der Belohnung bei einer positiven Belohnung mit einer Code Qualitätsmetrik verrechnet wird.

Schließlich erfolgt ein Aktualisieren 44 von Gewichten des Sprachmodells mit dem Wert der Belohnung. Das Resultat des Verfahrens ist ein Sprachmodell, das auf neuen ungelabelten Daten (hier zum Beispiel C-Code aus einer Motorsteuerung) besser trainiert ist, d.h. zuverlässigere Übersetzungen liefert.

Gemäß einer Ausführungsform umfasst das Verfahren weiterhin, dass die Belohnung approximiert wird durch Ausführung nur eines Tests der Tests des automatisierten Prüfens. Dies erlaubt eine Beschleunigung des Trainings.

## Patentansprüche

1. Computer-implementiertes Verfahren (10) zur automatisierten Programmcode Übersetzung von einer Ursprungssprache in eine Zielsprache, mit den Schritten:
- Übersetzen (11) eines Ursprung-Programmcodes (21) in einer Ursprungssprache in einen Ziel-Programmcode (23) in einer Zielsprache mittels eines Sprachmodells,
- wiederholtes Durchführen (12) des Übersetzens mit geänderten Bedingungen, wie Änderung eines oder mehrerer Hyperparameter wie einem Temperatur-Parameter des Sprachmodells, Transformationen im Ursprung-Programmcode (21) und/oder Änderungen in der Eingabe (24) an das Sprachmodell (22),
- Vergleichen (13) des Ursprung-Programmcodes (21) und der Ziel-Programmcodes (23) mittels eines Test-Harness (25), wobei der Test-Harness (25) automatisiert erzeugt wird, wobei Tests des Test-Harness (25) automatisiert erzeugt werden durch Fuzzing, Mutation der Eingänge des Test-Harness (25), Ableitung aus Contracts (26) der Ursprungssprache und/oder der Zielsprache,
wobei bei einem fehlgeschlagenen Vergleich (13) mittels der automatisiert erzeugten Tests der fehlgeschlagene Test oder die fehlgeschlagenen Tests als differenzierend erkannt und zur zukünftigen Verwendung in einer Testdatenbank gespeichert werden,
- Bewerten (14) der Ziel-Programmcodes (23) anhand von Code-Qualitätsmetriken, Test-Qualitätsmetriken und/oder der Anzahl von Tests.

2. Verfahren gemäß Anspruch 1, wobei die durch das Bewerten (14) erzeugten mehreren Bewertungen jeweils mit einem Gütewert versehen werden.

3. Verfahren gemäß Anspruch 2, wobei die Gütewerte erzeugt werden basierend auf Code- und Testmetriken, der Anzahl verfügbarer Tests, der Anzahl zusätzlich ausgeführter Tests und/oder der Art und/oder Anzahl formaler checks von Contracts (26) der Zielsprache.

4. Verfahren gemäß einem der Ansprüche 1 bis 3, wobei die geänderten Bedingungen des Übersetzens ein Umbenennen von Variablen im Code und/oder Änderungen von Aufgaben und/oder Befehlen in der Eingabe an das Sprachmodell (22) umfassen.

5. Verfahren gemäß einem der Ansprüche 1 bis 4, wobei bei einem fehlerhaften Ziel-Programmcode ein nicht erfolgreiches Vergleichen (13) und/oder Bewerten (14) erfolgt und eine Rückführung von Information über Fehler im übersetzten Ziel-Programmcode (23) an das Sprachmodell erfolgt.

6. Computersystem (20), dafür ausgelegt, das Verfahren (10) gemäß einem der Ansprüche 1 bis 5 auszuführen.

7. Computerprogramm, das dazu ausgelegt ist, das Verfahren (10) gemäß einem der Ansprüche 1 bis 5 auszuführen.

8. Computerlesbares Medium oder Signal, der/das das Computerprogramm gemäß Anspruch 7 speichert und/oder enthält.

## Claims

1. Computer-implemented method (10) for carrying out automated program code translation from a source language to a target language, comprising the following steps:
- translating (11) a source program code (21) in a source language to a target program code (23) in a target language using a language model,
- repeatedly performing (12) the translation with changed conditions, such as a change to one or more hyperparameters such as a temperature parameter of the language model, transformations in the source program code (21) and/or changes in the input (24) to the language model (22),
- comparing (13) the source program code (21) and the target program codes (23) using a test harness (25), wherein the test harness (25) is generated in automated fashion, wherein tests of the test harness (25) are generated in automated fashion by fuzzing, mutating the inputs of the test harness (25), derivation from contracts (26) of the source language and/or target language, wherein, in the event of a failed comparison (13) by way of the tests generated in automated fashion, the failed test or the failed tests are identified as differentiating and stored in a test database for future use,
- assessing (14) the target program codes (23) on the basis of code quality metrics, test quality metrics and/or the number of tests.

2. Method according to Claim 1, wherein the multiple assessments generated by the assessing (14) are each provided with a quality value.

3. Method according to Claim 2, wherein the quality values are generated based on code and test metrics, the number of available tests, the number of tests additionally carried out and/or the type and/or number of formal checks of contracts (26) of the target language.

4. Method according to one of Claims 1 to 3, wherein the changed conditions of the translation comprise renaming variables in the code and/or changes of tasks and/or commands in the input to the language model (22).

5. Method according to one of Claims 1 to 4, wherein, in the event of an incorrect target program code, an unsuccessful comparison (13) and/or assessment (14) takes place and information about errors in the translated target program code (23) is fed back to the language model.

6. Computer system (20) designed to carry out the method (10) according to one of Claims 1 to 5.

7. Computer program designed to carry out the method (10) according to one of Claims 1 to 5.

8. Computer-readable medium or signal storing and/or containing the computer program according to Claim 7.

## Revendications

1. Procédé (10) mis en œuvre par ordinateur de traduction automatisée de code de programme d'un langage d'origine en langage cible, comprenant les étapes suivantes :
- traduction (11) d'un code de programme d'origine (21) en un code de programme cible (23) dans un langage cible à l'aide d'un modèle de langage,
- exécution répétée (12) de la traduction dans des conditions modifiées, telle qu'une modification d'un ou de plusieurs hyperparamètres, comme un paramètre de température du modèle de langage, des transformations dans le code de programme d'origine (21) et/ou des modifications dans l'entrée (24) destinée au modèle de langage (22),
- comparaison (13) entre le code de programme d'origine (21) et les codes de programme cibles (23) au moyen d'un harnais de test (25), le harnais de test (25) étant généré automatiquement, des tests du harnais de test (25) étant générés automatiquement par fuzzing, mutation des entrées du harnais de test (25), dérivation à partir de contrats (26) du langage d'origine et/ou du langage cible,
en cas d'échec de la comparaison (13) au moyen des tests générés automatiquement, le ou les tests ayant échoué étant identifiés comme différenciants et étant stockés dans une base de données de tests en vue d'une utilisation ultérieure,
- évaluation (14) des codes de programme cibles (23) à l'aide de métriques de qualité de code, de métriques de qualité de test et/ou du nombre de tests.

2. Procédé selon la revendication 1, dans lequel les évaluations multiples générées par l'évaluation (14) sont respectivement associées à une valeur de qualité.

3. Procédé selon la revendication 2, dans lequel les valeurs de qualité sont générées sur la base de métriques de code et de test, du nombre de tests disponibles, du nombre de tests exécutés de façon supplémentaire et/ou du type et/ou du nombre de contrôles formels des contrats (26) du langage cible.

4. Procédé selon l'une quelconque des revendications 1 à 3, dans lequel les conditions modifiées de la traduction comprennent un renommage de variables dans le code et/ou des modifications de tâches et/ou de commandes dans l'entrée du modèle de langage (22).

5. Procédé selon l'une quelconque des revendications 1 à 4, dans lequel, dans le cas d'un code de programme cible défectueux, une comparaison (13) et/ou une évaluation (14) infructueuse est effectuée et un retour d'informations sur les erreurs dans le code de programme cible (23) traduit est effectué vers le modèle de langage.

6. Système informatique (20), conçu pour mettre en œuvre le procédé (10) selon l'une quelconque des revendications 1 à 5.

7. Programme informatique, conçu pour mettre en œuvre le procédé (10) selon l'une quelconque des revendications 1 à 5.

8. Support ou signal lisible par ordinateur, qui stocke et/ou contient le programme informatique selon la revendication 7.
